# EUROPEAN PATENT SPECIFICATION

(11) **EP 0 432 340 B1**
(45) Date of publication and mention of the grant of the patent: **09.03.1994**
(21) Application number: 89850437.8
(22) Date of filing: 15.12.1989
(51) Int. Cl.: B23B 51/04

(54) **Drill and cutting insert therefor**
Bohrer und Schneideinsatz dafür
Foret et plaquette de coupe pour celui-ci

(43) Date of publication of application: 19.06.1991
(73) Proprietor: SAFETY S.A., F-92107 Boulogne-Billancourt Cédex (FR)
(72) Inventor: Fouquer, Richard, F-37540 St Cyr / Loire (FR); Baulard, Gérard, F-37230 Fondettes (FR)
(74) Representative: Taquist, Lennart

(56) References cited:
- EP-A- 0 112 136
- DD-A- 206 094
- FR-A- 2 581 329
- US-A- 4 648 760

## Description

The present invention is related to a drill, according to the preamble of claim 1, for drilling in metal workpieces comprising an elongated drill body, the front end of which is provided with radially outer and inner indexable inserts that together are able to drill a hole in a solid workpiece. The invention also relates to an indexable insert to be used in such drill, according to the preamble of claim 5. Such a drill and such an insert is known from US-A-4149821.

Most current user of so-called short hole drills incorporates the use of a tool support body or holder which carries one or several small indexible carbide inserts which define the cutting edges. These types of tools have been widely accepted for drilling holes the length of which is about 2 to 4 times the diameter of the drilled hole. However, some problems of using this general construction for drilling in steel have been encountered due to the fact that the desirable accurate position of the insert when secured into its insert-receiving location has not always been achieved. Tools capable of performing this general function are shown in U.S. Patent Nos. 4,149,821 and 4,648,760.

Applicant has solved the problems of the prior art by utilizing indexable inserts having six contiguous edge faces of equal length and two hexagonal side faces that can be more accurately positioned into their pockets of a drill shaft see claims 1 and 5. Such drills will be more stable towards anticipated high cutting loads. This improved stability is of importance since the outer cutting edge of a drill insert of this type always has a greater surface speed then the inner edge for a given turning speed of the drill.

The invention will now be more closely described in conjunction with the accompanying drawing, in which
Fig. 1 is an elevational view of the elongated drill,
Fig. 2 is an end view of the drill of Fig. 1,
Fig. 3 is an enlarged cross-sectional view of the insert at its location in an insert-receiving pocket in the drill body,
Fig. 4 is a perspective view of a hexagonal insert of the present invention, and
Fig. 5 is a plan view of the insert of Fig. 4.

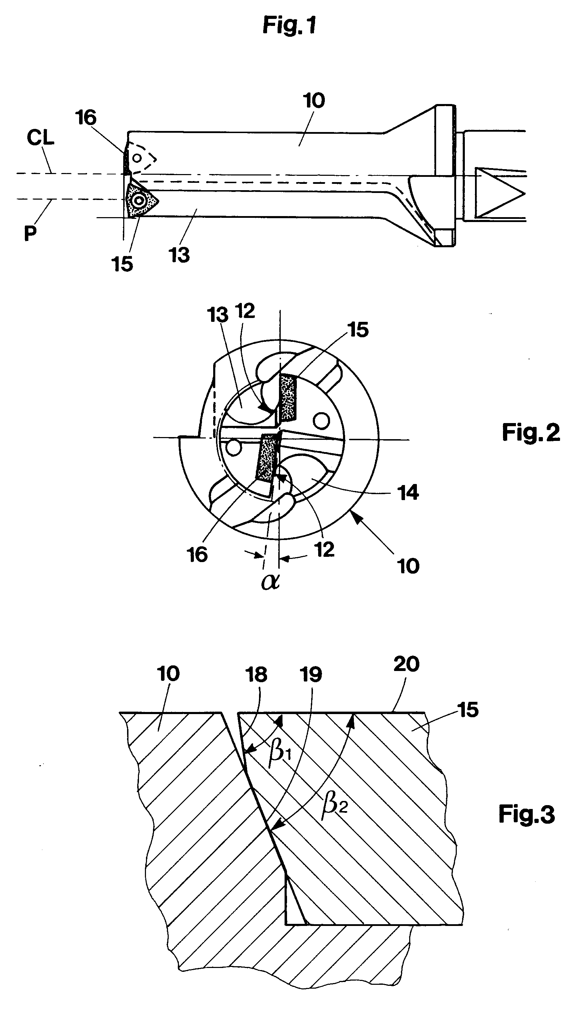

Figs. 1-2 show a portion of a cylindrical drill shank 10 which at its foremost part is provided with two insert sites 11, 12 positioned mainly on each side of the center line CL of the drill. Axial flutes or passages for the flow of chips are designated by 13 and 14. Both of the insert sites 11, 12 are centrally provided with holes to receive locking screws (not shown) for locking the inserts 15, 16 in the sites.

The two inserts 15 and 16 are arranged so that they extend axially to same extent and comprises two opposed hexagonal flat surfaces 20, 21 and six contiguous edge surfaces 18. The inserts are provided with a clearance angle β, between the upper hexagonal surface 21 and adjacent edge surface 18 which means that the necessary cutting rake is inherently provided on the insert per se, rather than by a particular orientation of the insert relative to the shank. The insert has a centrally provided aperture 17 for receiving a clamp screw.

With this illustrated preferred embodiment as shown in Fig. 1-2 the arrangements are such that the radially inner insert 16 is offset from a 180 degree relationship with the outer insert 15 by an angle α wherein α is of such magnitude that the drill is radially balanced; usually α is in the area of 5°-7°.

Because of the hexagonal shape of the inserts 15 and 16 said inserts will expose a free end profile including a V-shape. There is a pair of straight cutting edges 15a and 15b respectively that represent the operative cutting edges including an obtuse angle γ therebetween whereby each insert is so arranged in its site that the edges 15a and 15b will form the same angle γ/2 with an imaginary bisector P which extends parallel with the center line CL of the drill.

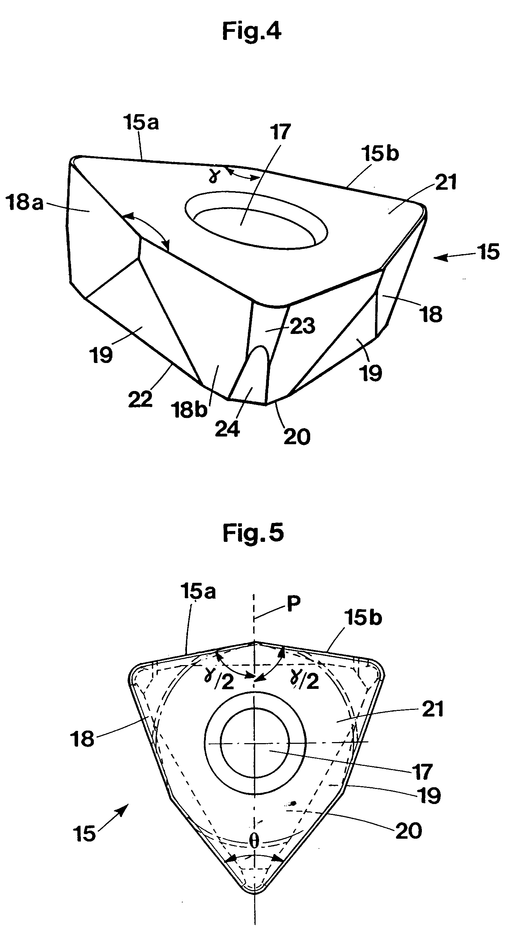

As shown in Fig. 4 the clearance face 18 of the insert includes two flat surfaces 18a and 18b that intersect at an obtuse angle γ. A planar locating land 19 of triangular shape extends between surfaces 18a, 18b from one hexagonal bottom surface 20 towards the opposite hexagonal upper surface 21 but is terminated at a certain distance from said upper surface 21. This locating land 19 is arranged symmetrically between clearance faces 18a, 18b. This land 19 is sloping such that its angle of inclination β₂ from the upper surface 21 is smaller than the clearance angle β, between the clearance face 18a and said upper surface 21. Hence, said land 19 is forming an edge 22 with only one hexagonal surface, namely the lower hexagonal surface 20. Further, at each cutting corner two adjacent clearance faces 18 meet each other whereby the transition therebetween is a smoothly curved surface 23 which intersects with upper surface 21 at acute angle ϑ and which is sloped away from the upper rake surface 21 to provide necessary clearance. At a position located at about half the thickness of the insert said curved surface 23 intersects with a bevelled surface 24 which intersects with only the bottom surface 20 at obtuse angle that enables the insert to enter small diameters.

## Claims

1. A drill comprising an elongated body terminating at one end in a cutting tip, a pair of diametrically opposite chip flutes extending along the body to the cutting tip, a pair of indexable inserts (15, 16) having V-shaped cutting edges at the end of the cutting tip lying at the trailing sides of the chip flutes, each said insert having six contiguous edge faces (18a, 18b) of equal length, which form three equal V-shaped clearance surfaces (18), and two opposed hexagonal side faces (20, 21), the intersection of said edge faces and one of said hexagonal faces forming cutting edges (15a, 15b), said inserts being clamped in pockets at the trailing sides of said chip flutes (13, 14), the edge of one insert extending radially such as to form the wall of the hole to be drilled, the other insert being located radially inwardly of the cutting circle of revolution, said inserts extending axially to generally the same extent, the inserts (15, 16) being so arranged that their operative cutting edges form the same equal angle with a bisector (P) of the intermediate corner that extends parallel with the center line (CL) of the drill, said inserts (15, 16) being provided with a clearance angle (β₁) between an upper hexagonal flat surface (21) and an adjacent edge surface (18), **characterized** in that each V-shaped clearance surface (18) is provided with a planar locating land (19) of triangular shape which is arranged symmetrically between the edge faces and has an angle of inclination (β₂) in relation to the upper flat surface that is smaller than the angle of inclination (β₁) between the edge surface (18) and said upper surface (21).

2. A drill as defined in claim 1, characterized in that the planar locating land (19) intersects with only the lower hexagonal flat surface (20) of the insert.

3. A drill as defined in claim 1, characterized in that the end portion of each edge surface (18) at the corner of the insert is in the shape of a smoothly curved convex surface portion (23) which intersects with only the upper hexagonal surface (21) of the insert at an acute angle.

4. A drill as defined in claim 3, characterized in that each corner area of the insert has a bevelled land (24) which intersects with only the lower hexagonal surface (20) at an obtuse angle.

5. An indexable cutting insert, said insert having six contiguous edge faces (18a, 18b) of equal length, which form three equal V-shaped clearance surfaces (18), and two opposed hexagonal side faces (20, 21), the intersection of said edge faces and one of said hexagonal faces forming cutting edges (15a, 15b), the insert being provided with a clearance angle (β₁) between an upper hexagonal flat surface (21) and an adjacent edge surface (18), **characterized** in that each V-shaped clearance surface (18) is provided with a planar locating land (19) of triangular shape which is arranged symmetrically between the edge faces and has an angle of inclination (β₂) in relation to the upper flat surface that is smaller than the angle of inclination (β₁) between the edge surface (18) and said upper surface (21).

6. An insert as defined in claim 5, characterized in that the planar locating land (19) intersects with only the lower hexagonal flat surface (20) of the insert.

7. An insert as defined in claim 5, **characterized** in that the end portion of each edge surface (18) at the corner of the insert is in the shape of a smoothly curved convex surface portion (23) which intersects with only the upper hexagonal surface (21) of the insert at an acute angle.

8. A drill as defined in claim 7, **characterized** in that each corner area of the insert has a bevelled land (24) which intersects with only the lower hexagonal surface (20) at an obtuse angle.

## Patentansprüche

1. Bohrer mit einem länglichen Korpus, der an einem Ende in eine Schneidspitze ausläuft, einem Paar von diametral gegenüberliegenden Spannuten, weiche sich entlang des Korpus zur Schneidspitze hin erstrecken, einem Paar von Wendeschneideinsätzen (15, 16), die V-förmige Schneidkanten am Ende der Schneidspitze haben und an den nachlaufenden Wänden der Spannuten liegen, wobei jeder Einsatz sechs aneinander hängende Kantenflächen (18a, 18b) gleicher Länge hat, die drei gleiche V-förmige Freiflächen (18) bilden, sowie zwei gegenüberliegende hexagonale Seitenflächen (20,21), wobei der Schnitt der Kantenflächen und einer der hexagonalen Flächen Schneidkanten (15a, 15b) bildet, die Einsätze in Taschen bzw. Aussparungen auf der nachlaufenden Wand der Spannuten (13, 14) festgeklemmt sind, die Kante eines Einsatzes sich in radialer Richtung so erstreckt, daß sie die Bohrlochwand bildet, der andere Einsatz radial innerhalb des Schneidumlaufkreises angeordnet ist, die Einsätze sich in axialer Richtung in etwa gleichermaßen erstrecken, die Einsätze (15, 16) so angeordnet sind, daß ihre wirksamen Schneidkanten denselben gleichen Winkel mit einer Winkelhalbierenden (P) der dazwischenliegenden Ecke bilden, wobei die Winkelhalbierende sich parallel zur Mittellinie (CL) des Bohrers erstreckt, die Einsätze (15, 16) mit einem Freiwinkel (β₁), zwischen einer oberen, hexagonalen ebenen Fläche (21) und einer angrenzenden Kantenfläche (18) versehen ist, **dadurch gekennzeichnet,** daß jede V-förmige Freifläche (18) mit einer ebenen Lokalisierungs- bzw. Positionierfläche (19) von dreieckiger Form versehen ist, die symmetrisch zwischen den Kantenflächen angeordnet ist und einen Neigungswinkel (β₂) bezüglich der oberen ebenen Fläche hat, der kleiner ist als der Neigungswinkel (β₁) zwischen der Kantenfläche (18) und der oberen Fläche (21).

2. Bohrer nach Anspruch 1, **dadurch gekennzeichnet,** daß die ebene Positionierfläche (19) sich nur mit der unteren hexagonalen ebenen Fläche (20) des Einsatzes schneidet.

3. Bohrer nach Anspruch 1, **dadurch gekennzeichnet,** daß der Endabschnitt jeder Kantenfläche (18) an der Ecke des Einsatzes in Form eines sanft gekrümmten, konvexen Oberflächenabschnittes (23) vorliegt, der sich nur mit der oberen hexagonalen Fläche (21) des Einsatzes unter einem spitzen Winkel schneidet.

4. Bohrer nach Anspruch 3, **dadurch gekennzeichnet,** daß jeder Eckbereich des Einsatzes eine abgeschrägte Fläche bzw. Fase (24) hat, die sich nur mit der unteren hexagonalen Fläche (20) unter einem stumpfen Winkel schneidet.

5. Wendbarer Schneideinsatz, wobei der Einsatz sechs aneinander hängende Kantenflächen (18a, 18b) gleicher Länge hat, die drei gleiche V-förmige Freiflächen (18) bilden, der Schnitt dieser Seitenkantenflächen und einer der hexagonalen Flächen Schneidkanten (15a, 15b) bildet, der Einsatz mit einem Freiwinkel (β₁) zwischen einer oberen, hexagonalen, ebenen Fläche (21) und einer angrenzenden Kantenfläche (18) versehen ist, **dadurch gekennzeichnet,** daß jede V-förmige Freifläche (18) mit einer ebenen Lokalisierungs- bzw. Positionierfläche (19) von dreieckiger Form versehen ist, die symmetrisch zwischen den Kantenflächen angeordnet ist und einen Neigungswinkel (β₂) relativ zu der oberen, flachen Fläche hat, der kleiner ist der Neigungswinkel (β₁) zwischen der Kantenfläche (18) und der oberen Fläche (21).

6. Einsatz nach Anspruch 5, **dadurch gekennzeichnet,** daß die ebene Positionierfläche (19) sich nur mit der unteren, hexagonalen, flachen Fläche (20) des Einsatzes schneidet.

7. Einsatz nach Anspruch 5, **dadurch gekennzeichnet,** daß der Endabschnitt jeder Kantenfläche (18) an der Ecke des Einsatzes die Form eines sanft bzw gleichmäßig gekrümmten, konvexen Flächenabschnittes (23) hat, der sich nur mit der oberen hexagonalen Fläche (21) des Einsatzes unter einem spitzen Winkel schneidet.

8. Bohrer nach Anspruch 7, **dadurch gekennzeichnet,** daß jeder Eckbereich des Einsatzes eine abgeschrägte Fasenfläche (24) hat, die sich unter einem stumpfen Winkel nur mit der unteren, hexagonalen Fläche (20) schneidet.

## Revendications

1. Un foret comprenant un corps allongé se terminant à l'une de ses extrémités en une pointe de coupe, une paire de rainures de copeaux diamétralement opposées s'étendant le long du corps vers la pointe de coupe, une paire de plaquettes amovibles (15, 16) à bords de coupe en forme de V situées à l'extrémité de la pointe de coupe et reposant sur les côtés arrière des rainures de copeaux, chacune desdites plaquettes comprenant six faces contiguës de bords (18a, 18b) de longueurs égales, qui forment trois surfaces égales de dégagement (18) en forme de V, et deux faces latérales hexagonales opposées (20, 21), l'intersection desdites faces de bords et de l'une desdites faces hexagonales formant des bords de coupe (15a, 15b), lesdites plaquettes étant serrées dans des poches aux côtés arrière desdites rainures (13, 14) de copeaux, le bord d'une première plaquette s'étendant radialement de façon à former la paroi du trou à percer, l'autre plaquette étant positionnée radialement à l'intérieur du cercle de révolution de coupe, lesdites plaquettes s'étendant axialement selon généralement la même extension, les plaquettes (15, 16) étant agencées d'une manière telle que leurs bords de coupe actifs forment le même angle avec un bissecteur (P) du coin intermédiaire qui s'étend en parallèle à l'axe (CL) du foret, lesdites plaquettes (15, 16) présentant un angle de dépouille (β₁) entre une surface plate hexagonale supérieure (21) et une surface adjacente (18) de bord,
**caractérisé** en ce que chaque surface de dégagement (18) en forme de V comprend une zone plane de positionnement (19) de forme triangulaire qui est disposée symétriquement entre les faces de bords et présente, par rapport à la surface plate supérieure, un angle d'inclinaison (β₂) qui est inférieur à l'angle d'inclinaison (β₁) entre la surface (18) de bord et ladite surface supérieure (21).

2. Un foret selon la revendication 1, caractérisé en ce que la zone plane de positionnement (19) n'est intersectée que par la surface plane hexagonale inférieure (20) de la plaquette.

3. Un foret selon la revendication 1, caractérisé en ce que la configuration de la partie d'extrémité de chaque surface (18) de bord au coin de la plaquette est une partie (23) de surface convexe légèrement incurvée qui n'est intersectée que par la surface hexagonale supérieure (21) de la plaquette selon un angle aigu.

4. Un foret selon la revendication 3, caractérisé en ce que chaque région de coin de la plaquette comporte une zone biseautée (24) qui n'est intersectée que par la surface hexagonale inférieure (20) selon un angle obtus.

5. Une plaquette de coupe amovible, ladite plaquette comprenant six faces contiguës de bords (18a, 18b) de longueurs égales, qui forment trois surfaces égales de dégagement (18) en forme de V, et deux faces latérales hexagonales opposées (20, 21), l'intersection desdites faces de bords et de l'une desdites faces hexagonales formant des bords de coupe (15a, 15b), la plaquette présentant un angle de dépouille (β₁) entre une surface plate hexagonale supérieure (21) et une surface de bord adjacente (18),
**caractérisée** en ce que chaque surface de dégagement (18) en forme de V comprend une zone plane de positionnement (19) de forme triangulaire qui est disposée symétriquement entre les faces de bords et présente, par rapport à la surface plate supérieure, un angle d'inclinaison (β₂) qui est inférieur à l'angle d'inclinaison (β₁) entre le bord supérieur (18) et ladite surface supérieure (21).

6. Une plaquette selon la revendication 5, caractérisée en ce que la zone plane de positionnement (19) n'est intersectée que par la surface plate hexagonale inférieure (20) de la plaquette.

7. Une plaquette selon la revendication 5, caractérisée en ce que la configuration de la partie d'extrémité de chaque surface (18) de bord au coin de la plaquette est une partie (23) de surface convexe légèrement incurvée qui n'est intersectée que par la surface hexagonale supérieure (21) de la plaquette selon un angle aigu.

8. Une plaquette selon la revendication 7, caractérisée en ce que chaque région de coin de la plaquette comporte une zone biseautée (24) qui n'est intersectée que par la surface hexagonale inférieure (20) selon un angle obtus.
